(19) Europäisches Patentamt
European Patent Office
Office européen des brevets

(11) **EP 3 705 964 B1**

(12) **EUROPEAN PATENT SPECIFICATION**

(45) Date of publication and mention of the grant of the patent:
**23.11.2022   Bulletin 2022/47**

(21) Application number: **20153765.1**

(22) Date of filing: **27.01.2020**

(51) International Patent Classification (IPC):
**G05B 19/418** *(2006.01)*

(52) Cooperative Patent Classification (CPC):
**G05B 19/4184;** G05B 2219/34465; Y02P 90/02; Y02P 90/80

(54) **A METHOD FOR THE SCALABLE REAL-TIME STATE RECOGNITION OF PROCESSES AND/OR SUB-PROCESSES DURING PRODUCTION WITH ELECTRICALLY DRIVEN PRODUCTION PLANTS**

VERFAHREN ZUR SKALIERBAREN ECHTZEITZUSTANDSERKENNUNG VON PROZESSEN UND/ODER TEILPROZESSEN BEI DER HERSTELLUNG MIT ELEKTRISCH ANGETRIEBENEN PRODUKTIONSANLAGEN

PROCÉDÉ DE RECONNAISSANCE D'ÉTAT ÉVOLUTIF EN TEMPS RÉEL DE PROCESSUS ET/OU DE SOUS-PROCESSUS PENDANT LA PRODUCTION AVEC DES INSTALLATIONS DE PRODUCTION À ENTRAÎNEMENT ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.03.2019   DE 102019105369**
**06.03.2019   DE 102019001838**

(43) Date of publication of application:
**09.09.2020   Bulletin 2020/37**

(73) Proprietor: **Technische Universität Berlin**
**10623 Berlin (DE)**

(72) Inventor: **EMEC, Soner**
**10555 Berlin (DE)**

(74) Representative: **Hertin und Partner Rechts- und Patentanwälte PartG mbB**
**Kurfürstendamm 54/55**
**10707 Berlin (DE)**

(56) References cited:
**CN-A- 108 776 276     US-A1- 2011 288 660**

• **WANG YULIN ET AL: "An analysis framework for characterization of electrical power data in machining", INTERNATIONAL JOURNAL OF PRECISION ENGINEERING AND MANUFACTURING, KOREAN SOCIETY FOR PRECISION ENGINEERING, SPRINGER, vol. 16, no. 13, 8 December 2015 (2015-12-08), pages 2717-2723, XP035720013, ISSN: 2234-7593, DOI: 10.1007/S12541-015-0347-Z [retrieved on 2015-12-08]**

**Description**

The invention relates to a method for the scalable real-time state recognition of processes and/or sub-processes during production with electrically driven production plants and for the generation of corresponding key figures according to the method of claim 1.

Background of the invention

During the 1980s, increased competition among manufacturers throughout the world raised the demand for process automation and resulted in market segmentation. The development of industrial control systems has enabled the automation of essential functions for value-adding in manufacturing; automation is the independent performance of a necessary process in a suitable technical manner. Provision of a high variety of products is a necessary response to the diversification of consumers' needs, thereby resulting in the manufacturing paradigm of mass customization. This paradigm aims to provide customized products at near mass production cost, thereby changing the requirements for monitoring in Automated manufacturing systems (AMS). To meet customer needs, manufacturers e.g. offer engines with the same number of cylinders but different performance classes, which increases variant diversity. For machining lines, such as for machining vehicle powertrain components, this means a change from classical fixed timing and full capacity load to flexible production load. Unlike fixed maintenance intervals, this shift requires condition monitoring manufacturing equipment. Such intervals in corrective, periodic, or preventive maintenance no longer apply because of continuously changing stresses on the components and use-time for machinery. In modern machining transfer lines, machine tools are grouped into stations. The duration of machining cycles is identical or multiple due to lean management in reducing the buffer between the required function of value-adding.

The manufactured product and required machining process can have any degree of complexity: i.e., a single car has about 30,000 parts, some manufactured at one factory, but most by suppliers along the supply-chain. The most machining intensive and complex to manufacture due to the required tolerance conformity, partially under $\leq \pm$ 1mm, is the powertrain consisting of different components such as cylinder head, crankcase and transmission housing.

Each component is typically machined in one machining line, which is specially designed and consisting partly of external or in-house customized machine tools, allowing variation in component geometry. Machines on the stations have one to five integrated chambers to buffer the workpieces. The machining operations are mostly sequential and critical complex geometries parallel. A single workpiece is produced with several machine tools and by using multiple tools during one machining cycle, such as a tool magazine.

Such a modern machining line can manufacture up to 450,000 cubic parts per year. In comparison to small-batch production or even one-piece production, where an operator is usually responsible for one machine tool and the workpiece in this type of modern machining line, the operator is in charge of a station, which includes up to 15 machine tools and up to several dozen parts during his shift. Thus, the operator is reliant on the monitoring system and is not directly attached to the machine anymore. Therefore, the acoustical or visual observation of process deviation is limited.

A single workpiece is machined in several workstations and tools. Consequently, several machines are responsible for the tolerance conformity of the workpiece. The produced tolerances of a workpiece depend on the individual workstation and its sub-processes, such as machining type and tool condition of the entire machining line. In contrast to mold production, where workpieces are manufactured on one workstation and supervised by a single machine operator, dependencies exist between several machines with multiple machining steps in machining lines.

A fault during machining occurs when one of its components or tools degrades or exhibits abnormal behavior, which may lead to a process failure or even breakdown. Even minor abnormal behavior in machining conditions can influence the tolerance conformity of several workpieces, which then propagates through the machining line and impairs the following machining operations. Tolerance conformity is a geometrical product specification, which is a part of a quality check procedure according to ISO 14253. The termination of a machine's ability to perform a required function for value-adding is not necessary, which hampers the source identification of such a variety of cross-linked disorders. The prevailing market conditions are so harsh that e.g. an interruption in a powertrain machining line could have a negative impact of approximately €20,000 per minute for an automotive manufacturer.

Scalable fault monitoring systems will allow the tracking and reporting of in-process stability across machining lines by providing a product and process specific data, which is required in many applications, such as in-process inspection, adaptive quality control, and predictive maintenance. The investment for a scalable process condition monitoring infrastructure will be low if the costs that result from process failure in automated manufacturing are taken into account.

Traditional maintenance strategies that involve corrective and preventive maintenance, such as run-to-failure maintenance and periodic maintenance, incur a high repair cost. Preventive maintenance has high initial costs because of system monitoring and alarm generation, but it helps in reducing the number of failures before they occur. The costs involved in earlier strategies should also consider the potential loss of productivity and idle person-hours, which may occur in cases of run-to-failure maintenance. Possible savings higher than 30% to 40% can be attained with predictive maintenance and condition monitoring systems. Surveys indicate that companies can gain the following average savings on their current expenditure by utilizing a predictive maintenance program:

- Lowering maintenance costs: 25% to 30%
- Elimination of breakdowns: 70% to 75%
- Reduction in downtime: 35% to 45%
- Productivity increase: 20% to 25%

The growing awareness of safety, increasing quality requirements, sustainability needs, and quickly changing product cycles have become significant factors for companies' competitiveness. As supported by the points in the above sections, production and its process activities need to have a high level of reliability, availability, and safety to achieve competitiveness. Predictive maintenance aims to reduce costs due to repair-induced failure and unnecessary periodic replacement of components.

The challenge for scalable condition monitoring and fault recognition is the existence of multiple types of faulty processes with unknown sources. Therefore, the goal is to develop a scalable fault monitoring system for detecting and reporting unusual process conditions immediately and tagging such conditions to a specific product. Without in-process transparency of such faulty processes, the manufacturers will be not able to improve the machining processes and increase their productivity.

Historically, automation in manufacturing is based on the ability to program in a high-level language, which emerged from the contributions of Konrad Zuse, who enabled all modern digital programming innovation of programmable logic controllers (PLC). A PLC is described as a specialized, computer-based, solid-state electronic device that forms the core of industrial control networks. PLCs bound on the conveyor, machine, and robots lead to high productivity by increasing the frequency, precision, and repeatability of manufacturing processes. Such decentralized and controlled units lead to a hierarchical communication network structure and an automation pyramid with changed requirements for scalable monitoring systems.

The transition to Industry 3.0 extensively used PLCs for automating processes. Most monitoring systems in manufacturing are part of a classical automation pyramid. In a typical example, each computerized numerical control (CNC) machine tool and the PLCs of equipment for machining and material transport are contacted with an industrial Ethernet (ISO/IEC 8802-3) on the control network area to an industrial PC that provides supervisory control and data acquisition (SCADA).

Following Moore's law, computational power almost increases exponentially every 50 years and the cost of transistors halves nearly every ten months. Consequently, internetworking smart sensors and actuators have become economically viable for flexible industrial automation by pushing web services, such as cloud computing and intelligent data analytics down to the shop floor and process level. Such internetworking smart devices in combination with manufacturing systems, such as so-called cyber-physical production systems (CPPS), will increase competitiveness by creating new market segments for process improvement and allowing participation on scalable services provided for the Internet of Things (IoT).

Consequently, monitoring and knowledge extraction out of an increasing number of smart sensor devices under real-time requirements have become a crucial competitive advantage. Automated manufacturing systems (AMS) represent significant investments and they need to operate reliably for several decades. Such a critical infrastructure requires a smooth transition from a traditional automation pyramid into multiple internetworking CPPS, thereby allowing intelligent monitoring of automated systems.

Recent studies by Fraunhofer estimate significant cost benefits associated with effects enabled through the application of such intelligent monitoring systems, which belong to the Industry 4.0 category, which is also described as a part of CPPS. The industrial transition to Industry 4.0 is characterized by the global increase in the Internet connectivity of devices and consequently the increase in monitorial perception. The primary drive of such a transition is a cross-pollination of discoveries, inventions and socio-economic factors, and the increased accessibility of information. The attributes of such an intelligent CPPS system in manufacturing are to be applied in the following:

- monitoring (1) recognition of unknown system states/condition, (2) classification of changing states/condition, (3) prioritization of best state out of multiple possible states/condition,
- controlling (4) dynamic reconfiguration of control actions and (5) performing adaptive actuation of the physical system to dynamically changing environmental conditions.

The world wide web has enabled field devices, such as manufacturing equipment as a physical device, to be connected to an online communication infrastructure in production systems on a cyber-layer, hence giving rise to cyber-physical production systems. The transition of services such as those provided by SCADA, Manufacturing Execution System MES, and Enterprise Resource Planning (ERP) into cloud provider such as Open Telekom, Google, Amazon, and Microsoft Azure could allow real-time business intelligence (RTBI) along the supply chain. Real-time in this context means near-zero latency between the data input and results in inaccessible information wherever and whenever it is required. Specifically, the computation latency for data analysis should not increase during observation and should be lower than the sampling rate of incoming events. In this context, "real-time" or soft rea-time means a range from microseconds to seconds after a business event has occurred.

Manufacturing operation management involves various actions and responsibilities across the organizational hierarchy. Multiple services provided by software tools support complex actions for planning, scheduling, and handling of failures. Thus, real-time fault recognition will increase the competitive advantage of physical systems through adequate decision-making based on the ability to refer to the necessary application by selecting the correct actions based on correct information, with low latency between sensing and actuation.

The increase in sophistication and complexity of such automated systems has created difficulties in fault monitoring using conventional methods, such as controller-embedded sensor systems, as revealed in the presented market study in the previous sections. Such challenges arise because such a complex physical system includes the following issues:

- An inability to anticipate the ever-growing "unknowns" and faults in automated machining lines with several machines and their sub-units, conveyor, elevator, and peripheral equipment such as compressors, which interact with each other and affect overall system functionality.
- Reconfigurations that increase stress on the system and bring about unknown intermediate states when working under multiple regimes and varying conditions.
- New wear times and a new portfolio of failures, which are not available with the knowledge of the decision maker.
- The probability that the system would fail to provide functionality under such conditions in the presence of system anomalies.
- The inability to detect and self-adjust the system configurations to lessen the effects of internal faults and external interferences to achieve system survivability.

WANG YULIN ET AL: "An analysis framework for characterization of electrical power data in machining" discloses a method to determine a machine state based on its power consumption. The algorithm uses a DTW approach.

CN 108 776 276 A discloses a system configured to detect abnormal machine states based on its power consumption and a DTW algorithm.

Therefore, there is a need for a scalable condition monitoring framework for real-time in-process fault recognition in streaming sensor data by fulfilling technical and market needs, such as (cost-) efficient scalability, and by providing a set of indicators as services for condition, quality, and schedule monitoring in AMSs.

Summary of the invention

In light of the prior art the technical problem underlying the present invention is to provide alternative and/or improved means for a scalable real-time state recognition of processes and/or sub-processes during production with electrically driven production plants without the disadvantages of the state of the art. In particular, the technical problem is to provide a scalable real-time state recognition of processes and/or sub-processes during production with electrically driven production plants which is scalable, efficient, flexible, compatible, easy and cheap to implement and which uses comparatively little computational power.

This problem is solved by the features of independent claim 1. Preferred embodiments of the present invention are provided by the dependent claims.

In one aspect, the invention relates to scalable in-process fault recognition procedure for condition monitoring in automated manufacturing, wherein an online machine learning procedure for real-time pattern-recognition in streaming sensor data within a data stream management framework is used,

wherein an algorithm is configured to identify the degraded process conditions from fault pattern, wherein preferably automated threshold setting allows intelligent fuzziness,

wherein power, energy, and time-related indicators are generated and/or used for online visualization and comparison of the identified process conditions,

wherein the indicators are configured for derivation of essential information for production control, preferably as online input for process control.

Preferably the procedure is configured for real-time pattern recognition on thousands of streaming sensor data with low computational effort.

It is clear to a skilled person that advantages, definitions and preferred embodiments for the method described below also apply to this method.

A production with electrically driven production plants preferably describes such processes within the framework of Automated manufacturing systems (AMS), used preferably for the mass production of manufactured goods such as consumer goods, e.g. cars, home appliances etc., intermediate goods or capital goods such as production machines.

Typically, this is about mass production e.g. the production of large amounts of standardized products, preferably including assembly lines.

Processes and/or sub-processes during such production preferably describe complete operations during production which have to be repeated many times for the production, but which can preferably be modified regarding certain production parameters during the production process. A (sub-) process preferably refers to an operation by a distinct production machine of the production plant and/or a distinct component of a complex production machine. Typical representations of a process are e.g. typical manufacturing steps performed by machines, such as milling, drilling, thread cutting, electric welding, conveying, stamping, extrusion, (injection) molding, cutting, boring, grinding, shearing, swaging, riveting, electrical discharge machining, electrochemical machining, electron beam machining, photochemical machining, and ultrasonic machining, or even plasma cutting and water jet cutting and/or screwing and may preferably concern various materials such as polymer, metal, semiconductors, glass, wood, foodstuff etc.

A sub-process is preferably a clearly describable operation which is comprised by the complete process, but which is itself not completing the process. This can be for example the sub-process of approaching a drill to the material which is to be drilled for the drilling process.

A scalable real-time state recognition preferably refers to the recognition of different kinds of states. These states can preferably refer to different levels of reflection and/or operation throughout the whole production process.

For example, a recognized state can refer to the operating state of a (sub-) process, of a processing production machine and/or a component of the processing production machine. Such an operating state is for example represented by a state chosen from the group of "Off", "Standby", "Idle" and/or "Processing".

Preferably, a recognized state can also refer to a processing state such as production "process completed", "ongoing production process" and/or "production process initialized", an information about the exact process, such as when a machine is able to execute different processes or processes with different parameters and/or settings, but also processing states referring to the quality and/or degradation of the production process, such as, in the worst case, "failure" or "imminent failure".

Preferably, for the method, measurement data is analyzed with respect to its current properties, corresponding key figures are generated, and a state recognition can be conducted directly by these key figures. Preferably, the key figures themselves represent directly the recognized state. It can also be preferred that a state is recognized by the analysis of the measurement data and only then corresponding key figures are generated.

The method comprises generation of a time sequence of measurement data M with a continuous index i by determining a power consumption of at least one production device with a predetermined sampling rate. The power consumption relates to an electric power consumption. The power consumption, which is an electric power consumption, is measured e.g. by an appropriate sensor within predetermined and preferably fixed intervals, resulting preferably in a predetermined sampling rate, which can for example be expressed in Hertz [Hz]. A sampling rate can for example be in a range between 0.001 Hz and 100 Kilohertz (kHz), more preferably within a range between 0.01 Hz and 1 kHz and most preferably between 0.1 Hz and 100 Hz. Most preferably, the sampling rate is between 0.2 Hz and 10 Hz, such as about 1 Hz or about 1 measurement per second. Therefore, at each such measurement, a measurement point representing the measured power consumption of the production device is preferably produced, resulting preferably in a sequence of discrete measurement data.

Each data point preferably obtains an enumeration in form of an index, preferably by a non-negative integer. This enumeration can preferably be implemented by the sensor. More preferably, the index is assigned by the computing unit after transmission. In this case, preferably two different strategies to assign an index can be used: in the first case, the index is a consecutive enumeration of the incoming measurement data. Therefore, preferably, all transmitted data preferably comprise a consecutive index.

In the second case, an index can be assigned with approximately the sampling rate, wherein measurement data, which has been sampled but not transmitted, is considered, such that the next incoming data is assigned an index number corresponding to the number of sampling periods that have passed. For example, if one data point is assigned with index number 345 and the next two data points are not transmitted to the computing unit, the next incoming data point after that during the next sampling period would be assigned 348 in this case. The index preferably represents the order of the instant of time of the measurement, where an earlier measurement instant is represented by a lower index number. Preferably, the index i of the first measurement is 1, whereas the next is 2 etc. Preferably, the index enumerates the chronological order of measurement and reads is represented by a sequence, e.g. 1, 2, 3, 4, 5, 6, 7, 8, 9 10, 11, 12, 13, 14, 15, 16, 17, 18, 19, 20, 21, ..., 30, ..., 40, ..., 50, ..., 60, ..., 70, ..., 80, ..., 90, ... 100, ... 200, ..., 300, ..., 400, ..., 500, ..., 600 ..., 700, ..., 800, ..., 900, ..., 1000, .... etc. and can in principle preferably extend to infinity. Therefore, preferably, the measurement data preferably consist of the measured power and the corresponding index i.

With the index preferably being assigned by the computing unit, data points which have not been transmitted are preferably not being assigned an index in this case.

The power consumption relates to the electrical power consumed by the production device.

Preferably, the power consumption is measured in Watt [W]. Preferably the measured power is in the range of 1 milliwatt [mW] to 1 Megawatt [MW], more preferably in the range of 1 W to 100 Kilowatt [kW]. The range and/or the measurement resolution is preferably adapted to the ranges of power which are of interest. A preferably resolution of the measurement is 0.1 mW to 10 mW and in particular about 1 mW.

Within this document, indications such as approximately, ca., about etc. preferably refer to a tolerance of less than $\pm$ 20%, more preferably of less than $\pm$ 10%, even more preferably of less than $\pm$ 5% and most preferably of less than $\pm$ 1%. Similar preferably refers to magnitudes which are approximately equal.

The sequence of measured data can preferably comprise analogue data. It can also be preferred that the originally analogue data is transformed into a digital data format, e.g. by the sensor.

The sequence of measured data is transmitted to a computing unit via streaming protocols, RTP, UDP, RTP/IP and/or UDP/IP. The transmitted measurement data is described with M.

A streaming protocol preferably is a special protocol used for the transmission of data, preferably, but not necessarily, over a computer network. For the purpose of transmission, the data is preferably digitized and/or converted into a streaming format using an encoder.

Streaming preferably refers to data that is constantly received by and/or presented to one end of the data transmission while being delivered by the source of data.

There are preferably protocols particularly well suited for live streaming/real-time streaming, such as the User Datagram Protocol (UDP), Stream Control Transmission Protocol (SCTP) and/or Datagram Congestion Control Protocol (DCCP). Preferably, also conventional file transfer protocols can be used for streaming, e.g. routable protocols such as Transmission Control Protocol (TCP), Connectionless Network Protocol (CLNP) and/or Internetwork Packet Exchange (IPX).

Preferably, streaming protocols have a fault tolerance; e.g. when the connection is poor, at least five percent, preferably about ten percent loss of data packets must be compensated for.

Protocols are preferably chosen from the group comprising Hypertext Transfer Protocol (HTTP), File Transfer Protocol (FTP), Real Time Transport Protocol (RTP), Real Time Control Protocol (RTCP), Real-Time Streaming Protocol (RTSP), Real Time Messaging Protocol (RTMP), Internet Protocol (IP), Internet Group Management Protocol (IGMP), Microsoft Media Server Protocol (MMS) and/or Remote Desktop Protocol (RDP).

UDP preferably uses a simple connectionless communication model requiring a minimum of protocol mechanisms. UDP preferably provides checksums for data integrity and port numbers in order to address different functions at source and/or destination. Preferably, there is no handshaking dialogues, and there is thus preferably no guarantee of delivery, no ordering nor duplicate protection. In order to use error-correction facilities nevertheless at the network interface level, e.g. TCP or SCTP could be preferably used.

UDP is particularly suitable when error checking and/or correction are not needed or performed in the application. UDP preferably uses no overhead for processing in the protocol stack. UDP is particularly well suited for time-sensitive applications as in this method where dropping a packet is preferred over waiting for packets delayed due to retransmission.

UDP/IP preferably refers to the use of the UDP protocol over the Internet (the internet protocol (IP)).

The Real-time Transport Protocol (RTP) preferably is a network protocol, which is often used for delivering audio and video over IP networks. RTP preferably runs over UDP. RTP can be used in conjunction with the RTP Control Protocol (RTCP). In this case, RTP preferably carries the data streams whereas RTCP can be used for monitoring the transmission and/or synchronization of multiple data streams. RTP is preferably designed for end-to-end, real-time transfer of streaming media and is therefore well suited for this method.

RTP/IP preferably refers to the use of the RTP protocol over the Internet (the internet protocol (IP)).

A person skilled in the art knows routinely how to implement a streaming protocol.

Transmission means the process of sending and propagating an analogue or digital information signal, here in particular the measured data from a measurement device to the computing unit. Transmission can preferably be wireless, or cable based. Cables for the transmission of electrical signals such as copper cables and/or for optical transmission such as optical fibres can be used.

Each transmitted measuring point is preferably provided with a time stamp relating to the arrival time in the computing unit. This time stamp preferably comprises an absolute timing information about the arrival time in the computing unit.

Preferably, also a relative timing information with respect to the arrival time of the last measuring point can be comprised, e.g. the time difference between the two events. Preferably, the time difference can be also calculated given the index number and the known sampling rate.

A computing unit preferably means at least one computing unit and preferably comprises at least one computer and/or any programmable logic able to execute an algorithm related to the measurement data.

It is preferred that the method is used for a real-time state recognition of production plants, such that several (sub-) processes and/or production devices are measured and/or evaluated simultaneously and are thus transmitted about simultaneously to the at least one computing unit. The current properties of M are analyzed by means of a current measuring point and a data set relating to a past measuring point of M, preferably only by means of a current measuring point and a data set relating to a past measuring point of M.

The analysis is executed by the computing unit. A data set relating to a past measuring point may comprise more than one informational data relating to a past measuring point, e.g. analyzed properties of the last measuring point and/or one or more key figures relating to the last measurement point. That the data set relating to the past measurement point preferably means that it depends on the last measurement point. The past measurement point preferably is the ultimate measurement point successfully transmitted to the computing unit previously to the current measurement point and/or the previously measured point with the index being a direct predecessor of the index of the current measuring point

The current measuring point preferably comprises the actual measuring point of the power consumption, more preferably also the index i and most preferably also the time stamp.

That the current properties are analyzed by means of the current measuring point and a data set relating to a past measuring point of M also means that the data is analyzed with respect to further, already known (stored data) which is not comprised by the measurement data, such as reference measurement data (R) which belongs to a previous reference measurement.

The analysis is executed by the computing unit, e.g. an appropriate algorithm.

The current properties preferably comprise amplitude information, time information and/or quantities which can be derived therefrom. Amplitude information preferably relates to the amplitude of the measured power consumption, e.g. the measured power. Timing information can refer to the index of the involved measurement points and/or the time stamp of the involved measurement points. Derivable quantities are preferably quantities which can be calculated or otherwise determined by an algorithm given the amplitude and/or timing information.

The analysis is performed by means of absolute values of the properties of M and by comparison of the properties of M with reference measurement data R. This preferably means that

1. either only the current measuring point and a data set relating to a past measuring point of M are used for the analysis or
2. the analysis is executed by comparing those data to reference data R.

In the first case, the current measuring point and a data set relating to a past measuring point of M can e.g. directly be compared for analysis, e.g. with respect to the index i (are the indices of the current measuring point and the past measuring for example consecutive or has data not been successfully transmitted?), the time stamp (for example: do both measuring points have approximately the same temporal distance with respect to arrival time to their respective previous points) or the power amplitude (for example: how much has the power consumption changed from the previous measuring point to the current measuring point.).

In the second case, the analysis comprises the evaluation of a similarity of the current amplitude pattern of M and the amplitude pattern of R. It was surprising that that such a pattern comparison could be implemented using only the current measuring point of M and a data set relating to a past measuring point of M. In this second case, the analysis can e.g. be based on timing information, such as the relation in temporal distance between the measurement points of M and the measurement points of a reference R or a similarity between M and R.

Real-time key figures which are representative for the current properties of M are created. These real time key figures can e.g. be measured absolute values, such as temporal values or power related values or differences between such values of preferably the current measuring point and the past measuring point. The real time key figure can preferably also comprise relative values due to a comparison of data, such as ratios, similarity and/or normalized values. A key figure can preferably comprise a dimension such as power (W), time (Seconds [s], Minutes [min], hours [h], days [d]) and the like or be a dimensionless number.

The current states of production processes and/or sub-processes is recognized and/or identified on the basis of real-time key figures. This means that the key figures preferably directly lead to the recognition of the state, which is preferably an operating state, such as e.g. "Off", "Standby", "Idle", "Processing", "process completed", "ongoing production process", "production process initialized", or preferably a processing state, e.g. a recognition of an exact process, such as one executed process of a machine when the machine is able to execute different processes (e.g. milling, drilling) or processes with different parameters and/or settings, but also processing states referring to the quality and/or degradation of the production process, such as, in the worst case, "failure" or predictive states such as "imminent failure". The recognition on the basis of key features is executed by the computing unit, e.g. by a suitable algorithm. The difference between recognition and identification is preferably only relevant with respect to the recognition and identification of a processing state.

Preferably, for operating states "recognition of a state" means that the key figures suggest with high reliability that the respective measurement data originates from the recognized operating state.

For processing states, the meaning of the term "recognition" is the same whereas the term "identification" means that the recognized state has been concluded. Preferably, thus, an identification of a (sub-) process only takes place, when the (sub-) has been also recognized, preferably, but preferably not previously to the recognition of the state.

Identification of a (sub-) process thus preferably means termination and/or conclusion of a recognized (sub-) process.

Preferably, a second set of real-time-key figures associated with the recognition and/or identification of (sub-) processes is created. This second set of real-time-key figures is preferably based on the recognition process and/or identification process of a processing state on the basis of (the first set of) real-time key figures. For example, if a process has been recognized, key figures can be created which e.g. are concerned with a comparison of the recognized process and an exemplary process, e.g. by comparison of an amplitude pattern of measured data with respect to reference data.

The key figure or figures are processed further processing and/or stored in a database. This preferably comprises a second set of real-time-key figures. The key figures preferably comprise important and preferably real-time information of processes and/or sub-processes during production with electrically driven production plants.

A further processing can be for example in the form of the creation of a data set relating to a past measuring point of M which is used for the upcoming measuring point of M. In this way, the method is preferably an iterative method. That is preferably why the data set relating to a past measuring point of M can also contain information about the data set relating to a measuring point of M before the past measurement point.

In this way a substantial pattern comparison between the measurement data M and reference data R can be based only on the current measuring point of M and a data set relating to a past measuring point of M.

Therefore, e.g. complex processes with complex measurement data patterns can be recognized only by the use of very little data, thus reducing computational resources, speeding up the computation, enhancing the real time characteristics and also reducing the need for data storage. A further processing and/or storing can also comprise storage of the key figures for later use and/or visualization of the key figures,

The method is preferably an iterative and/or continuously executed method. In this context, real-time preferably means that all steps are continuously executed as fast as possible and continuous data is generated in form of key figures which relate to a measurement of a power consumption, which has been made very recently, for example within minutes, seconds, milliseconds or less. One main purpose of the method is the recognition of a state of the (sub-) processes in real-time. In this context, real-time preferably means that a state can be recognized during or directly after the process. As an example, if a failure of a process is recognized, the process and/or the related production device can be stopped before further substantial damage is caused.

The method is easily scalable due to its easy measurement principle, its capabilities to be connected to a computing unit by a network and also due to the little needed data to transmit and store. Due to the little data and computer resources needed, the real-time capacities are excellent since many different key figures can be generated and variable states can be recognized. Preferably, only reference data have to be generated beforehand and/or during production for a recognition of different processes on different machines. The system is very flexible and compatible. This is also due to the measurement principle, which does not need a particular interface standard. The system is also easy to implement, and cheap, standard compatible sensors are only needed, which are connected to a computing unit via a streaming protocol.

The method advantageously allows predictive maintenance.

In a preferred embodiment, the power consumption is an electric power consumption and is measured by at least one sensor, preferably an external sensor based on an inductive and/or capacitive measurement.

Preferably, the electrical power intake or power consumption is measured with market available three-phase voltage and/or current sensors and/or transformers on the electrical main. The electrical main preferably is the at least one electrical power cable for the supply of electrical energy to the at least one production device. It can preferably be any cable distributing electrical power in order for the production device to execute the (sub-) process. The sensor can be an inductive and/or capacitive sensor which does not require a direct electrical connection to the power cable, but which can be brought sufficiently near to the cable to execute the measurement without a significant disturbance from other sources. The sensor can also preferably comprise a clamp which is configured to realize a temporary electrical contact to an electrically conductive device connected to an electrical power supply. The sensor can further comprise a standard Voltmeter, Amperemeter and/or Multimeter comprising an interface to read out measurement data. This embodiment has the advantage that the method is very easy to implement and does not need any specific and/or proprietary interfaces in order to realize the measurement.

In one embodiment, the sensor can be arranged circumferentially around the respective cable.

In one embodiment the sensor can be a "Carlo Gavazzi WM3096".

The sensor preferably has a determined or adjustable interface and/or data format in order to transmit the data.

In one embodiment, the data can be collected and/or transmitted by a data logger.

In one embodiment, the sensor exhibits an interface in order to transmit the measurement data via a streaming protocol.

The sensor or several sensors can be preferably connected to a device with a suitable interface with is configured to transmit the data via a streaming protocol. Suitable interfaces are known to the skilled person and can preferably be integrated in a standard sensor device.

In one embodiment, an Open Platform Communications (OPC) client "Datalogger" version 3.5.0.40 from Toolbox is used to process and store the data in a SQL database (Microsoft SQL Server 2008R2). The requirements for the windows test server preferably includes (1) Windows Server ISS 7 or better, (2) ASP.NET 4.0 or better with reactive extensions for ".NET", (3) Microsoft StreamInsight 2.1 and/or NEsper v5.3.0. In order not to disturb the production data stream, the PLC-signals are preferably available on the Manufacturing Execution System (MES) system and are mirrored by a SQL-database preferably with the complete set, during the monitoring campaign. As part of the monitoring scenario, the end user such as operator or maintenance staff at the office has preferably access to the server through "Remote desktop connection".

These restrictions, for critical network infrastructure, are typical, because the sensors and actuators are preferably controlled in so-called closed-loop distributed control systems with an industrial PC located preferably close to the machining line or in the shop floor area with restricted flexible modification for querying on the data streams from outside the network area or even from the Internet. Any direct access to the SCADA system from the OPC UA server used for the concept validation in the use case factory is preferably not possible due to the critical infrastructure classification. Therefore, there is preferably a layer 2 tunneling protocol (L2TP) preferably allowing link layer packet as data inside UDP datagrams over the transport layer to stream the data from the OPC UA server. Thus, L2TP preferably runs over the transport layer just in one direction from the sensor to the OPC UA server, without allowing so-called end-to-end connectivity with the sender. The sensor IP in the delivery protocol can run over any data-link protocol from IEEE 80.2 over IEEE 802.3. In that case, the data are preferably pushed just in one direction without any transmission control from the receiver.

In the invention, a real-time key figure is generated on the basis of an analysis of a current pattern similarity of an amplitude of M with a stored, finite temporal sequence of reference measurement data R,

wherein R comprises N reference measuring points having a continuous index j,

wherein R comprises a representative amplitude pattern for at least one specific production process and/or sub-process of the electrically driven production plant,

wherein the real-time key figure is generated, which is representative of the current pattern similarity, and

wherein the determined production process and/or sub-process and its current state being recognized on the basis of the real-time key figure.

In this embodiment, the generated real-time key figure preferably represents a current pattern similarity of an amplitude of M with a stored, finite temporal sequence of reference measurement data R. A pattern similarity describes the similarity of the temporal course of measured amplitudes of two or more patterns to each other.

In this embodiment, the similarity between the actual measurement data and a representative amplitude pattern R, which is representative for at least one specific production process and/or partial process of the electrically driven production plant is preferably to be determined. A representation of at least one specific production process and/or partial process can for example be a temporal sequence of measured (electrical) power amplitudes during an exemplary representation of such a process, e.g. the drilling of a hole, and preferably comprises the amplitudes throughout the whole process.

The reference measurement data is stored on the computing unit and has been measured beforehand. The reference measurement data preferably comprises a finite temporal sequence, which has been preferably measured with the same sampling rate as the measurement data it is to be compared with. Therefore, the reference data preferably also comprises an index j which refers to the chronological order of the measurement, preferably in analogy to the measurement index i.

Altogether, the reference data R is a finite sequence of data comprising a first and a last data point, preferably associated with the beginning and the ending of the process, respectively.

A real-time key figure is generated, which is representative of the current pattern similarity between M and R. Since M is a continuously recorded measurement data in real-time, the current pattern similarity preferably relates to a pattern similarity of the current measurement data with the reference pattern of R. This pattern similarity can comprise a similar pattern throughout the whole measurement data from the first measuring point up to the current measuring point, in most of the cases it preferably just comprises a partial similarity of the measurement data comprising just a part of consecutive measurement data comprising recent measuring points, preferably including the current measuring point. Such a partial similarity e.g. occurs when there is currently a process and/or sub-process ongoing within the measured production device which is essentially the same as and/or similar to the (sub-) process represented by R, for example the same or similar drilling process of the same or similar element with the same or similar whole dimensions.

Preferably, the current pattern similarity only gives a useful result when several points of measurement data are compared with reference data. Nevertheless, preferably also less than N points of M can be compared with respect to a (current) pattern similarity to R. Like this, for example the onset of a (sub-) process represented by R within the data M can be recognized.

The real-time key figure can then be used in order to determine the production process and/or sub-process. There can be a single particular reference data in this method, which is always compared with the measurement data M. This can preferably be the case if one particular production device associated with the process represented by R is always to be regarded.

It can also be preferred that there are several reference data stored for several processes which can be executed by the production devices. Preferably, there can be several reference data for several or even of all (sub-) processes of interest within the whole production plant.

If the key figure representing the current pattern similarity suggests a high similarity to a particular R, the process and/or sub-process which is associated with R is recognized. This suggests that the currently measured power distribution is associated with such a process, which is ongoing or has recently been terminated at the measured device. Therefore, the ongoing processes within the production plant are recognized and/or monitored by such a scheme.

In a further preferred embodiment of the invention, the calculation of the current pattern similarity of the amplitudes between M and R is given by a pattern similarity between M and R with respect to the current measuring point of M.

It is preferred that a pattern similarity can be calculated between two temporal sequences of physical data in general, without necessarily referring to a current similarity of actual measurement data with respect to R. The current pattern similarity preferably refers to such a pattern similarity which is calculated with respect to the current measuring point. It thus preferably involves the similarity of the current measuring point (and preferably also recent past measurement data) and the reference data.

In a further preferred embodiment of the invention, a pattern similarity between a first discrete temporal sequence of amplitude values and a finite discrete temporal sample sequence of amplitude values relative to an i-th point $m(i)$ of the first sequence is given by the accumulated distance of $m(i)$ with a chronologically last point of the sample sequence, wherein the pattern similarity falling below a threshold value signifies recognition of a pattern in the first sequence and rising of the pattern similarity, preferably discontinuously, for a first time after recognition of a sequence preferably signifies identification of a pattern in the first sequence.

This embodiment preferably relates to the measurement scheme for a pattern similarity in general, which preferably does not have to be a current pattern similarity. The similarity of two discrete temporal sequences of amplitudes, where at least the sample sequence is preferably finite, can preferably be compared by this scheme. It is preferred that a first temporal sequence can be a sequence measured approximately in real time, which does preferably not have a determined length and can preferably be an infinite sequence in principle. It is preferred that the discrete temporal sample sequence is finite. Preferably, the similarity of the first sequence with respect to the sample sequence is evaluated. Preferably, the pattern similarity is always determined relative to an i-th-point $m(i)$ of the first sequence. That preferably means that the pattern similarity of $m(i)$ and preferably also of older data points of the sequence (data points preferably with a lower index $k < i$) with respect to the sample sequence are compared. Preferably, for a pattern similarity relative to $m(i)$, no newer data points with an index $k > i$ are taken into account.

Preferably, in order to evaluate the pattern similarity between a first discrete temporal sequence and a sample sequence relative to i-th point, the accumulated distance of $m(i)$ with a chronologically last point of the sample sequence is calculated. Preferably, this calculation involves also previous points of the sample sequence, in particular all points of the sample sequence including the last point of the sample sequence. Calculating the accumulated distance is known by a person skilled in the art, e.g. within the framework of dynamic time warping.

The calculation of the accumulated distance can preferably be very efficiently calculated and/or approximated by a two-dimensional matrix, where each matrix entry with the index o, p can e.g. represent the accumulated distance of the o-th point (e.g. index o) of the sample sequence and the p-th point (e.g. index p) of the first sequence. By calculating the accumulated distance between $m(i)$ and the last point of the sample sequence, the similarity of the first sequence and the whole sample sequence relative to an i-th point of the first sequence can be calculated very efficiently.

Preferably, the pattern similarity, thus preferably the accumulated distance of $m(i)$ with respect to a last point of the sample sequence, which is falling below a threshold value is a very good indicator for an actual pattern similarity. Therefore, preferably, this means recognition of a pattern within the first sequence. This could for example mean that a process within the first sequence has been recognized as being so similar to a process represented by a sample sequence such that the process itself can be recognized by the recognition of the sequence.

Preferably, when the pattern similarity rises again for the first time after recognition, preferably discontinuously, an identification of a sequence takes place. That preferably means that a pattern sequence has been recognized within the first sequence but that the pattern similarity for m(i) is such that m(i) and preferably any further upcoming point of the first sequence after m(i) do no resemble the sample sequence anymore. Therefore, the identification is preferably associated with m(i-1). An identification of a pattern preferably means that the pattern and preferably also the associated process has been terminated.

It can also be preferred that a pattern similarity between a first discrete temporal sequence of amplitude values and a finite discrete temporal sample sequence of amplitude values relative to an i-th point m(i) of the first sequence and a j-th point of the sample sequence is evaluated by the accumulated distance of m(i) with the j-th point of the sample sequence. The pattern similarity falling below a threshold value then preferably signifies recognition of a partial pattern of the sample sequence (preferably until the j-th point of the sample sequence) in the first sequence. Rising of the pattern similarity for a first time after recognition of such a partial sequence preferably signifies identification of a partial pattern in the first sequence, in analogy the above-said.

In the invention, the method comprises the following steps:

- Calculate the current pattern similarity of amplitudes between M and R using the distance of the current measuring point of M with each reference measuring point of R and the accumulated distance of the past measuring point of M with each reference measuring point of R;
- Creation of a real-time key figure which is representative for the current pattern similarity,
- recognition and/or identification of a specific production process and/or sub-process on the basis of recognition and/or identification of a sequence of the representative amplitude pattern in M when the current pattern similarity falls below a threshold value L* and/or
- Recognition of the current state of the specific production process and/or sub-process based on the current pattern similarity.

The current pattern similarity between M and R can preferably be efficiently calculated using the distance of the current measuring point of M with each point of R and the accumulated distance of the past measuring point of M with each point of R. Like this, the accumulated distance of the current measuring point and the last point of R can be very efficiently calculated.

In this embodiment, the distance calculation of the current measuring point of M preferably only needs to take into account the current measuring point of M to calculate its distance with each point of R, wherein R has preferably been saved in a calibration process beforehand. Preferably, the accumulated distance of the past measuring point with each point of R embodies the data set relating to a past measuring point of M and can be calculated beforehand. Like this, the current pattern similarity can be very efficiently calculated making a calculation using only the actual measuring point and the data set relating to a past measuring point of M. The distance of the current measuring point with each point of R can e. g. be represented by a one-dimensional matrix in form of a column vector and/or a row vector. Similarly, the accumulated distance of the past measuring point with each point of R can be e.g. represented by a one-dimensional matrix, e.g. in form of a column vector and/or a row vector. The complexity of calculation for the current pattern similarity, for example for a sequence R of length N, can then preferably be in the order of N instead of $N^2$ as usually for the comparison of two patterns of length of order N, for example in dynamic time warping.

A real-time key figure which is representative for the current pattern similarity is created, for example the accumulated distance of the current measuring point of M with the last point of R.

Then, a recognition and/or identification of a specific production process and/or sub-process takes place on the basis of recognition and/or identification of a sequence of the representative amplitude pattern in M when the current pattern similarity falls below a threshold value L*. This threshold value preferably has been attained in a training and/or calibration process beforehand.

The recognition and/or identification of a sequence of the representative amplitude pattern in M means that the process and/or sub-process which is represented by R can be recognized. M, which preferably represents sampled electric power data of at least one production device preferably carries signatures of the ongoing processes on the production device, meaning preferably that the recognized and/or identified pattern shows that the respective (sub-)process has been executed on the production device. This is preferably meant by recognition of the current state of the specific production process and/or sub-process based on the current pattern similarity. Recognition then preferably means that an ongoing process/pattern has been found by the scheme, whereas identification preferably means that the measured accumulated distance is such that the pattern/process recognized beforehand has been terminated.

In a further preferred embodiment of the invention, the accumulated distance D(i, j) of an i-th point m(i) of a first discrete sequence of amplitude values to a j-th point r(j) of a second discrete sequence of amplitude values is given by

$$D(i,j) = \begin{cases} 0 \text{ for } i = 1 \\ \min\{D(i-1,j-1), D(i-1,j)D(i,j-1)\} + d(i,j) \text{ ,} \\ \infty \text{ otherwise} \end{cases}$$

wherein $d(i,j)$ is given by the absolute value of the difference between $m(i)$ and $r(j)$.

It is clear to a person skilled in the art that typically, in order to calculate $D(i,j)$, $D(i-1,j-1)$, $D(i-1,j)$ and $D(i, j-1)$) have to be calculated. Preferably, in a typical situation within this method, these values have been calculated beforehand in order to calculate e.g. previous values of interest for the accumulated distances, such as $D(i-1,j)$, in order to evaluate a previous pattern similarity of interest.

Like this, the accumulated distance $D(i,j)$ preferably relies only on the distance of the i-th point of the first sequence to the j-th point and (j-1)-th point of the second sequence and the accumulated distance of the (i-1)-th point of the first sequence with the j-th and (j-1)-th point of the second sequence. Typically, a one-dimensional matrix, e.g. in form of a column vector and/or a row vector, can represent all calculated values of e.g. $D(i-1,1$ to $j)$ and of e.g. $D(i,1$ to $j)$. Therefore, the complexity of the calculation of such an accumulated distance can be reduced significantly, in particular if previous calculations have been stored by means of storing the aforementioned vectors.

Since the accumulated distance is preferably calculated using the minimum of $D(i-1,j-1)$, $D(i-1,j)$ and $D(i,j-1)$, which in turn can themselves rely on previous accumulated distances, the accumulated distance of $D(i,j)$ can be based on the accumulated distance of the accumulated distance of previous points, such as (i-1)-th point, the (i-2)-th point and so on. It is preferred that the starting point i*, which is the first point of the first discrete sequence involved in the calculation of the accumulated distance $D(i,j)$, is put out and/or stored and can be preferably comprised within the generated key figures.

In a preferred embodiment a real-time key figure which is representative for the current pattern similarity of amplitudes between M and R comprises the starting point i* as the first point of R involved in calculating the current pattern similarity.

It is particularly preferred that a recognition and/or identification of a sequence of the representative amplitude pattern in M when the current pattern similarity falls below a threshold value L* involves the recognition and/or identification of the starting point i* involved in calculating the particular current pattern similarity. Like this, the starting point of the pattern similar to the representative pattern of R can be preferably marked.

In a further preferred embodiment of the invention, after an identification of a sequence, a reset of the analysis of the current pattern similarity is performed, wherein the point of the sequence at which the identification takes place is henceforth regarded as the first point of the first discrete temporal sequence of amplitude values.

A reset preferably also comprises setting all calculated accumulated distances before and preferably at the measuring point of identification to zero.

It can also be preferred that the first point after the point of the sequence at which the identification takes place is henceforth regarded as the first point of the discrete temporal sequence of amplitude values.

It can also be preferred that the first point of the sequence at which the identification takes place and/or the first point after the point at which the identification takes place is henceforth the starting point for calculating an accumulated distance in order to calculate the current pattern similarity. This can be advantageous since after an identification, the points associated with the identification and other previous points typically do not have to be considered anymore for future pattern similarities.

In the invention, for determining reference measurement data R of a specific production process and/or subprocess and an associated threshold value L*, an analysis of pattern similarity is performed between a measurement data sequence S and each finite temporal sequence of pattern measurement data $R_1$ - $R_3$ with respect to each measurement point of S in the given temporal sequence,

wherein $R_1$ - $R_3$ comprise three representative reference measurements of a particular production process and/or sub-process and are successively included in S, and

wherein reference measurement data R is selected from the pattern measurement data $R_{1-3}$ on the basis of the pattern similarity with S and the threshold value L* is selected on the basis of a suitability to identify only the pattern measurement data $R_{1-3}$ in S.

A measurement data sequence S comprises three finite temporal sequences of pattern measurement data $R_1$ - $R_3$, which are included in S in succession of each other. In particular, S comprises measurement data measured at once while a certain (sub-process) to be represented by $R_1$ - $R_3$ has been executed three times in a row at the measured production device.

The purpose of this embodiment lies in the selection of reference data R comprising a representative amplitude pattern for at least one specific production process and/or sub-process of the electrically driven production plant, preferably of the production device and/or preferably to select an adequate threshold value L* in order to recognize the respective (sub-) process within the measurement data. This embodiment can preferably also be referred to as "calibration process".

Beginning with the provision of S, an analysis of pattern similarity is performed between the measurement data sequence S and each finite temporal sequence of pattern measurement data $R_1 - R_3$ with respect to each measurement point of S in the given temporal sequence, in particular by calculating the respective accumulated distance, as has been described previously.

A threshold value L* is selected such that the only the pattern measurement data $R_{1-3}$ in S can be successfully recognized and identified within S. This can for example be accomplished by choosing an arbitrary starting value such that $R_1$, $R_2$ and $R_3$ and preferably more arbitrary patterns are recognized and preferably lowering the threshold value until the identification of all three $R_{1-3}$ is successfully conducted without identifying any artefactual pattern. It can also be preferred that one starts with a low threshold value, such that in the beginning, no patterns are recognized and then raising the threshold until the identification of all three $R_{1-3}$ is successfully conducted without identifying any artefactual pattern.

Preferably, there can be a threshold value L* particularly suitable for the reliable identification of $R_{1-3}$ without the identification of any spurious pattern artefact. Such a threshold value can e.g. be found by variation and/or an optimization process, preferably combined with a statistical analysis, as is known by the skilled person.

Preferably, to determine the optimal threshold, one repeatedly applies each possible threshold and counts the matches to each of $R_{1-3}$. Then, preferably, an upper bound is selected as the element of an exponential sequence which leads to more than z matches, wherein z preferably describes the number of representative patterns $R_z$ in S, thus preferably 3 in this case. As an example, the upper bound threshold for the first initial sequence is discovered with an exponential series $\{a_j = 4^j\}$ and/or $\{a^j = 8^j\}$, $j \in \mathbb{N}$ for each incremental increasing step j. Starting by j = 1 until the stop criteria z'(t) $\geq$ z are fulfilled, where z'(t) are preferably the number of matches for the actual threshold, where the number of matches preferably means the number of recognized similar patterns. Z preferably is the number of actual patterns to be recognized within S, thus preferably 3 in this case.

As a preferred next step, the highest lower bound is calculated by logarithmic increases and/or decrease of the upper bound until exactly z matches are detected.

As a preferred next step, the lowest higher bound is calculated by logarithmic increases and/or decrease of the upper bound until exactly z+1 matches are detected.

As a preferred next step, the optimal threshold for each of $R_{1-3}$ is calculated as the average value between the highest lower and the lowest higher bound.

The threshold value L* preferably is then the maximum of all reference pattern specific optimal thresholds for each of $R_1 - R_3$, as it allows recognition of z matches in all cases.

Preferably, the optimal pattern or also called reference pattern R is the pattern $R_1 - R_3$ which is associated with the lowest optimal threshold and thus preferably a prototype pattern.

This embodiment for calibration purposes makes advantageously use of the calculation method of the pattern similarity used also as in other embodiments of this method used for the scalable real-time state recognition of processes and/or sub-processes.

It is particularly advantageous that it can be implemented during normal production process, the production process preferably does not have to be interrupted. Particularly, ordinary production processes can be used in order to record S and/or to determine R.

In a further preferred embodiment of the invention, the reference measurement data R selected is that of the reference measurements $R_1 - R_3$ with which S has the highest pattern similarity. This is an advantageous realization of the above-mentioned method used for the determination of R.

In a further preferred embodiment of the invention, the computing unit is present on the Internet.

It is a great advantage of the method that only little data amount and/or data traffic is needed in order to realize the scalable real-time state recognition of processes and/or sub-processes. Preferably, only the actual measuring point of each production device has to be transmitted to the computing unit. Therefore, the computing unit can preferably be present on the internet and preferably also does not need particularly high computing capabilities.

In a further preferred embodiment of the invention, the further processing of the real-time key figures and/or storage of the real-time key figures in a database are selected from the group comprising activation of a warning system, visualization of a temporal course of the key figures, programmable logic controller (PLC), Supervisory Control and Data Acquisition (SCADA), Manufacturing Execution System (MES), Enterprise Resource Planning (ERP), Supply Chain Management (SCS), Maintenance Management, Statistical Process Control (SPC) and/or Quality Management System.

Some of the real-time key figures are preferably suitable for the activation of a warning system. A warning system preferably is a system which can inform and/or alert qualified personal that some processes are not executed properly, e.g. due to a failure of machine parts.

The real-time key figures can preferably be displayed as e.g. curves, graphs etc., for example on a displaying system such as one or more computer screens. They can e.g. be used to inform qualified personal about the ongoing processes, energy consumption, workload, the proper execution of processes, the state of tools and/or machines etc.

Preferably, the further processing of the real-time key figures and/or storage of the real-time key figures in a database are used for a programmable logic controller (PLC). A programmable logic controller (PLC) or programmable controller preferably is an industrial tool in form of a computer which is particularly configured for the control of manufacturing processes, such as assembly lines and/or robotic devices. With a PLC, a high reliability control and ease of programming and process fault diagnosis can be realized. The method can preferably be used as a realization of a PLC which is particularly easy to implement and whose control capabilities are realized by using the key figures, preferably comprising further processing of the real-time key figures and/or storage of the real-time key figures.

The further processing of the real-time key figures and/or storage of the real-time key figures in a database can preferably be also selected from the group comprising Supervisory Control and Data Acquisition (SCADA), Manufacturing Execution System (MES), Enterprise Resource Planning (ERP), Supply Chain Management (SCS), Maintenance Management, Statistical Process Control (SPC) and/or Quality Management System.

Supervisory Control and Data Acquisition (SCADA) preferably is an architecture for a computer and/or computer network implemented control system architecture comprising preferably a graphical user interface for process supervisory management on a high-level. It can preferably comprise PLC and can be regarded as supervisory on a higher level. Preferably, SCADA can be (partially) realized by the describe method.

Manufacturing execution systems (MES) are preferably computerized systems used in manufacturing. MES can e.g. be used for tracking and documentation of the transformation from raw material to finished good. MES preferably works in real time and enable the control of various elements of a production process.

Enterprise resource planning (ERP) preferably describes the integrated management of main business processes, preferably in real-time.

Supply-chain management (SCM or SCS) preferably describes the flow management of goods and/or services, e.g. comprising the management of movement and storage of raw materials, of work-in-process inventory and/or finished goods from production to consumption.

Maintenance Management or Computerized maintenance management system (CMMS) preferably describes a computer implemented database (software) for information about various maintenance operations within an organization.

Statistical process control (SPC) preferably comprises a method of quality control and/or a method to monitor and control a process by means of statistical methods.

A quality management system (QMS) preferably comprises business processes used in order to meet customer requirements.

Many control methods can preferably thus be implemented by using the inventive method.

In a further preferred embodiment of the invention the analysis performed by means of absolute values of the properties of M comprises the time interval between the current measurement point of M and the past measurement point of M.

This can be accomplished preferably by calculating the time interval according to the time stamp.

In another preferred embodiment, it can be accomplished according to the index i, in particular if the index i considers data who have been omitted e.g. because of a transmission error. Then the time interval can be directly calculated by calculating the index difference between both points multiplied with the sampling period.

This embodiment can e.g. be helpful to recognize transmission errors in the streaming protocol and/or high data traffic.

Preferably, a representative real-time key figure can be created.

In a further preferred embodiment of the invention, the analysis performed by means of absolute values of the properties of M comprises the power interval between the current measurement point of M and the past measurement point of M.

In a further preferred embodiment of the invention, the analysis performed by means of comparison of the properties of M with reference measurement data R comprises the *duration deviation* defined by the temporal difference between the identified sequence of M and the reference measurement data R divided by the temporal length of the reference measurement data R.

The duration deviation preferably is the relation between the duration of the identified sequence and the template sequence. Therefore, it preferably belongs to complexity level four (see below). This indicator is a measurement of template similarity regarding the aspect of duration. The duration deviation contains important information as it compares a real value with a target value, thus it is preferably well suited for automatic generation of alarm reports in condition monitoring.

Preferably, a real-time key figure representative for the duration deviation can be created, which is preferably comprised by a second set of key figures.

In a further preferred embodiment of the invention the analysis performed by means of comparison of the properties of M with reference measurement data R comprises the *time horizon* defined by the temporal difference between the time of recognition of a specific production process and/or sub-process to the time of identification of the specific recognized production process and/or sub-process.

Depending on the process- and signals-condition degradation, the dissimilarity between the reference sequence R and the subsequence to be recognized out of streaming data increases, consequently the requirements for recognition and identification increase in latency, allowing to assess the degree of degradation.

Preferably, a real-time key figure representative for the time horizon can be created, which is preferably comprised by a second set of key figures.

In a further preferred embodiment of the invention the analysis performed by means of comparison of the properties of M with reference measurement data R comprises the *similarity,* defined as the average distance of each measurement point m(i) of an identified sequence of M to the associated measurement point of R, wherein an associated measurement point of R is found by appropriate mapping of points of M and R.

Appropriate mapping preferably comprises statistical evaluations as to which point of M and R are preferably associated with respect to the ability of M and R to represent similar patterns.

Preferably, appropriate mapping comprises choosing the associated point of R as the point of R having the smallest distance to m(i), having approximately the same relative arrival time and/or having approximately the same relative time index k and/or the time index with the smallest deviation to k, wherein the relative arrival time is calculated with respect to the temporal distance of a point with the first point of the sequences and/or wherein the relative time index k is the time index which has been assigned with i* as first index.

This preferably means that an identified sequence and the reference data R are preferably compared with respect to their similarity. For this preferably the average distance of each point of M which is part of the identified sequence to each associated point of R is compared.

In order to compare both sequences properly, preferably points with the same relative index are compared. This preferably means e.g. that the first recognized point of the sequence M is compared with the first point of R and so on. This can preferably be realized when the indices of the sequence of M are numbered consecutively with i* as first index.

Preferably, both sequences can be compared with respect to time as determined by the index number and the known sampling period where missed points can be considered. Then, preferably, the temporal grid of the points is given by the sampling period and all points of the compared sequences are aligned within the grid. Points of M, which have not been transmitted are preferably neither aligned within the grid. In this case, preferably only points of M and R aligned within the grid are compared, preferably with respect to their power amplitudes. This is preferably a case where the associated measurement point of R is the point having (approximately) the same relative time index.

Alternatively, at least the sequence of M or even both sequences can be compared with respect to their relatiive arrival time as determined by the time stamp. Then, not all points of both sequences have to be aligned. The general alignment of both sequences can be optimized by statistical means for example in order to properly compare both sequences. In this case, when preferably not all points are temporally aligned, the associated measurement point of R is preferably the point of R having the smallest distance to m(i). This distance is preferably determined by a Euclidian norm within the t-P- Space, where t stands for time and P for power. Alternatively, the associated point of R can be the point having approximately the same relative arrival time, approximately the same relative time index k and/or the time index with the smallest deviation to k.

If a different point can be considered as associated point depending on the applied rule, a rule for which two associated points are approximately relatively temporally aligned has preferably priority over any other rule.

Once the associated point of R to each point of M has been found, the distance between each pair of points is preferably determined e.g. as difference in power between associated points and/or as Euclidian distance in the P-t-space.

Preferably, if a point of R is an associated point for two points of M, then the distance to both points is evaluated and preferably the average is taken. Alternatively, preferably having the same result, just one of the two distances is considered.

The identified sequence preferably comprises all point of the sequence from recognition to identification.

The similarity is then preferably the averaged distance of each point of the identified sequence with each point of R. This particularly means that all distances are summed up and divided by the number of points N of R.

Preferably, a real-time key figure representative for the similarity can be created, which is preferably comprised by a second set of key figures.

Detailed description of the invention

The invention is further described by the following examples and figures. These are not intended to limit the scope of the invention, but to represent preferred embodiments of aspects of the invention provided for greater illustration of the invention described herein.

Examples relating to the calculation of pattern similarity using the accumulated distance

The following example of Table 1 illustrates the Dynamic Time Warping (DTW) method. Given two finite sequences with equidistant time propagation $S*=\{1,4,0,1,1\}$ (from bottom to top) and $SP=\{0,0,2,-1,0\}$, the elementwise distance $d(i,j)$ and the accumulative distance $D(i,j)_{ti+1}$ can be calculated as:

| $S*$ | Elementwise Distance | | | | | $S*$ | Accumulative Distance | | | | |
|---|---|---|---|---|---|---|---|---|---|---|---|
| 1 | 1 | 1 | 1 | 2 | 1 | 1 | 7 | 7 | 7 | 8 | 7 |
| 1 | 1 | 1 | 1 | 2 | 1 | 1 | 6 | 6 | 6 | 7 | 6 |
| 0 | 0 | 0 | 2 | 1 | 0 | 0 | 5 | 5 | 6 | 5 | 5 |
| 4 | 4 | 4 | 2 | 5 | 4 | 4 | 5 | 5 | 4 | 8 | 9 |
| 1 | 1 | 1 | 1 | 2 | 1 | 1 | 1 | 2 | 3 | 5 | 6 |
| $SP$ | 0 | 0 | 2 | -1 | 0 | $SP$ | 0 | 0 | 2 | -1 | 0 |

Table 1

The minimum warping path can be identified in the accumulative distance and is here shown by bold borders in Table 1 on the right. DTW fulfills the condition for a metric just in two space dimensions, for three dimensions it is semi-metric because it does not fulfill the triangle-inequality. It is meant as a distance measure applied to time-series data as it allows warping in space than the $Lp$-norm. The warping path enables to recognize sequences which are slightly degraded to the initial sequence or out of phase yet to be recognized as similar as the DTW distance is low. Therefore, DTW is preferably used for dissimilarity measure. Several restrictions can be employed to prevent extensive computation due to the quadratic increasing space complexity for the distance matrix with each new element:

Monotonicity: The elements of the warping are preferably ordered monotonically so that

$$i_{\jmath-1} \leq i$$

and

$$j_{\jmath-1} \leq j.$$

Continuity: Every step within the path is preferably restricted to neighbor elements so that

$$i - i_{\jmath-1} \leq 1$$

and

$$j - j_{\jmath-1} \leq 1.$$

Boundary condition: The starting element index is preferably defined by $i_1=1$, $j_1=1$ and the end point by

$$i_{\jmath}=n, \; j_{\jmath}=m.$$

.

Further possible constraints are the slop constraint - which is used to prevent excessive movements in a single direction - and the warping window. It has to be noted that using a warping window by Ratanamahatana et al. [1] and Sakoe et al. [2] not only decreases the space complexity for the calculation but also increases the accuracy of DTW due to decreasing of overlapping local minimum for the shortest distance path.

Most distance known measures require all data to be resident in main memory during analysis such as in a database. Therefore, analysis for streaming data remains a trend in big data analytics - a gap, concerning adequate methods and a challenge in computational difficulty and complexity.

A new approach reduces the complexity and the amount of needed data significantly. This can be achieved because, firstly, computing the whole distance matrix for each incoming streaming element contains mostly redundant information. Secondly, the traditional approach leading to an overlap of several "local minimum" or instead best alignments for each occurrence of a similar subsequence, whereas only the optimal alignment as best match is of interest. The traditional pattern recognition procedure requires post-processing to classify the aligned subsequences out of observed streaming data.

Pattern discovery is a special case of pattern recognition as all arriving streaming elements are already classified whether or not they resemble an initial sequence. Unlike the pattern recognition procedure, the significant advantage of the optimized version is that the required length of the sliding window is reduced down to one streaming element. Only, the reduction or decoupling of the window size from the initial sequence allows to deal with semi-infinite streaming power data with linear computational complexity, consequently a low latency in the calculation can be achieved. Furthermore, such a scheme enables to discover with a high sampling rate and high streaming power data on a scalable manner.

The following example helps understanding the new approach. The input of the algorithm consists of a finite initial sequence

$$P = (p_1, \ldots, p_j, \ldots, p_\beth)$$

(preferably the same as the reference data sequence R), an initial threshold and the semi-infinite arriving streaming power data

$$S = (s_1, \ldots, s_i, \ldots, s_{\beth'}),$$

preferably the same as M described previously. In the following Table 1, an example is provided to describe the algorithm for an given initial sequence with P=(3,6,1,3) to recognize out of streaming power data S=(1,1,2,7,0,3,7,5...) a similar subsequence

$$SP[s_\aleph : s_{\beth *}]_r$$

and even identify a similar subsequence in S and report

$$SP[s_\aleph : s_\beth]_{id.}$$

The exemplary threshold is $\varepsilon=6$ (L*) as shown in Table 2.

| | A | B | C | D | E | F | G | H | I | J | |
|---|---|---|---|---|---|---|---|---|---|---|---|
| 1 | Stream S / Initial P | i | 1 | 2 | 3 | 4 | 5 | 6 | 7 | 8 | ... |
| 2 | j | $s_i$ / $p_j$ | 1 | 1 | 2 | 7 | 0 | 3 | 7 | 5 | ... |
| 3 | 4 | 3 | 9(1) | 9(1) | 7(3) | 10(3) | 6(3) | 3(3) | 7(3) | 7(6) | ... |
| 4 | 3 | 1 | 7(1) | 7(1) | 6(3) | 8(3) | 3(3) | 5(6) | 7(6) | 5(6) | ... |
| 5 | 2 | 6 | 7(1) | 7(1) | 5(3) | 2(3) | 8(3) | 3(6) | 1(6) | 2(6) | ... |
| 6 | 1 | 3 | 2(1) | 2(2) | 1(3) | 4(4) | 3(5) | 0(6) | 4(7) | 2(8) | ... |
| | Reporting | Initialized as | | | | | | | | | |
| 7 | $d_{report}$ | ∞ | ∞ | ∞ | ∞ | ∞ | 6 | 3 | ∞ | ∞ | ... |
| 8 | $j_a$ | ∞ | ∞ | ∞ | ∞ | ∞ | 3 | 3 | ∞ | ∞ | ... |
| 9 | $j_e$ | ∞ | ∞ | ∞ | ∞ | ∞ | 5 | 6 | ∞ | ∞ | ... |
| 10 | Recognition | False | False | False | False | False | True | True | False | False | ... |
| 11 | Identification | False | False | False | False | False | False | True | False | False | ... |

Table 2

The following explanation refers to the checkerboard columns A to J and lines 1 to 11 of Table 2. The initial sequence can be considered as a set of elements $p_j$ with a numerical value (B6 to B3) ordered by their index $j$ (A6 to A3). It has to be noted, that in this visualization the direction of the template is upwards as the first value is contained in B6 and the last in B3. The arriving stream power data provides a streaming element $s_i$ with the numerical value in C2 to J2 at each time tick i (C1 to J1). The stream is potentially endless thus unbounded - yet for this explanation a number of eight elements is sufficient. Each cell of the presented matrix (C3 to J6) contains an accumulated distance and the corresponding starting position. For each incoming streaming value, a vector containing the accumulated distance $D(i,j)_{ti+1}$ as presented in Table 1 is calculated (such as D3 to D6 for i=2). A calculation example for cell D5 is provided as marked in dark grey.

Firstly, the elementwise distance $d(i,j)$ is calculated, applying Euclidean Distance such as:

$$d(i,j)=|s_i-p_j|.$$

d(2,2)=|1-6|=5, cf. D5 of Table 1.

Then the previous results are considered to find the best possible projection. The result of the previous elementwise distance $d(i-1,j)$ is temporary storage for the next calculation step.

$$D_{best} = \min \begin{cases} D(i,j-1,) \\ D(i-1,j) \\ D(i-1,j-1) \end{cases}$$

$$D_{best} = \min \begin{cases} 2 \ (D3) \\ 2 \ (C4) = 2 \\ 6 \ (C3) \end{cases}$$

where the lower accumulated distance is taken from the example of Table 2.

Finally, the sum of both the elementwise distance and the minimum of previous results represents the accumulated distance:

$$D(i,j) = d(i,j) + D_{best}$$

D(2,2) = 5 + 2 = 7, cf. Table 2, D5.

As starting element, the required constraint is:

$$D(0,j) = 0$$

$$D(j,0) = \infty$$

Finally, the total accumulated distance - contained by the last cell of the accumulated distance vector (C3 to J3, bold, Table 2) - is a measure of dissimilarity between the initial sequence and a subsequence of the streaming power data. The total accumulated distance

$$D(\beth,i),$$

is the last element of the accumulated distance vector, which represents the dissimilarity between the initial sequence P and the best possible projection of an subsequence

$$SP[s\aleph: s\beth]$$

out of streaming power data S. A sequence is first recognized if the total accumulated distance is lower than the predefined threshold and lower than the previously reported as subsequence recognized in streaming power data as shown in Table 2 with its corresponding visualization.

These values are updated continuously and for identification is required that:

$$D(i,n) \le \varepsilon \wedge D(j,n) \le d_{report}$$

Cf. G3, table 2

$$D(5,4) = 6; \ d_{report} = \infty$$

$$6 \le 6 \wedge 6 \le \infty$$

$$D(6,4) = 3; \ d_{report} = 6$$

Cf. H3, table 2

$$3 \le 6 \wedge 3 \le 6$$

An identification only takes place if no upcoming subsequence could result in a projection with a lower total accumulated distance.

Here, the value of H3 of table 2 is the identified value.

Examples relating to the calibration process used in order to determine the reference pattern R and the threshold value L*

In this example, z preferably is the number of recorder reference patterns $R_i$ within S, e.g. 3. Furthermore, $\varepsilon$ describes the threshold value, where $\varepsilon_{opt}$ preferably describes the threshold value L*. The following table 3 describes an exemplary process in detail.

Table 3

| | Comment | Content | Notation | Details |
|---|---|---|---|---|
| **Input** | The input is required for the threshold training. | Reference pattern | $R_1$ | The reference pattern R simply is the first of n occurrences of the goal pattern in the recorded value set S and thus contained by S. It is defined by the start and end within S. |
| | | Recorded value set | $S$ | |
| | | Occurrences of R in S | $z$ | |
| | | Accuracy | $a$ | The accuracy is a parameter which influences the quality of the exponential approximation. |
| **Exponential approximation** | The exponential approximation takes place n times - once for each occurrences of R in S. | Match Count | $c(t)$ = number of matches $(R_i, t, S)$ | |
| | | Upper Bound (UPB) | $a_i = 8^j$ <br> $t \in \{a_j\}_{j \in \mathbb{N}}$ <br> $\varepsilon_{up} = \arg\min(c(t) > z)$ | To determine the optimal threshold, it is necessary to repeatedly apply each possible threshold and to count the matches, which is provided by $c(t)$. |
| | | Highest Lower Bound (HLB) | $\varepsilon_{HL} = \min\{\varepsilon_{HL,i} \mid c(\varepsilon_{HL,i}) = z\}_{i \in \{2,\dots,a\}}$ <br> $\varepsilon_{HL,1} = \dfrac{\varepsilon_{up}}{2}$ <br> $\forall i \in \{2,\dots,a\}\ \varepsilon_{HL,i} = \begin{cases} \varepsilon_{HL,i-1} + \dfrac{\varepsilon_{up}}{2i} & \text{if } c(\varepsilon_{HL,i-1}) < z \\ \varepsilon_{HL,i-1} - \dfrac{\varepsilon_{up}}{2i} & \text{if } c(\varepsilon_{HL,i-1}) \geq z \end{cases}$ | The upper bound is the element of the exponential sequence which leads to more than z matches. The highest lower bound is calculated by logarithmic increases (decreases) of the upper bound until exactly z matches are detected. |
| | | Lowest Higher Bound (LHB) | $\varepsilon_{LH} = \min\{\varepsilon_{LH,i} \mid c(\varepsilon_{LH,i}) = z + 1\}_{i \in \{2,\dots,a\}}$ <br> $\varepsilon_{LH,1} = \dfrac{\varepsilon_{up}}{2}$ <br> $\forall i \in \{2,\dots,a\}\ \varepsilon_{LH,i} = \begin{cases} \varepsilon_{LH,i-1} + \dfrac{\varepsilon_{up}}{2i} & \text{if } c(\varepsilon_{HL,i-1}) < z + 1 \\ \varepsilon_{LH,i-1} - \dfrac{\varepsilon_{up}}{2i} & \text{if } c(\varepsilon_{HL,i-1}) \geq z + 1 \end{cases}$ | The lowest higher bound on the other hand is calculated by logarithmic increases (decreases) of the upper bound until exactly z+1 matches are detected. |
| | | Optimal threshold for reference pattern | $\varepsilon_{R_i} = \dfrac{\varepsilon_{HL} + \varepsilon_{LH}}{2}$ | Finally the optimal threshold for $R_i$ is defined as the average of highest lower bound and lowest higher bound. |

(continued)

| | Comment | Content | Notation | Details |
|---|---|---|---|---|
| **Define alternative reference profiles** | | Alternative reference profiles | $R = \{R_2, \dots, R_z\}$ | After the first exponential approximation of the optimal threshold for $R_1$, Alg. is used to detect the remaining $z-1$ occurrences of the goal pattern in $S$. They are defined by start and end point. The exponential approximation is then repeated for each detected match - thus in total $z$ times. |
| **Define Threshold and Template** | | Optimal threshold | $\varepsilon_{opt} = \max\{\varepsilon_{R_i}\}\ i \in \{1, \dots, z\}$ | The optimal threshold is the maximum of all reference pattern specific threshold, as it allows recognition of $z$ matches in all cases. The optimal template pattern on the other hand is the one which is associated with the lowest optimal threshold and thus a prototype pattern. |
| | | Optimal template | $R_{opt} =$ | |

22

EP 3 705 964 B1

To permit intelligent fuzziness for the reference-threshold

$$\varepsilon_{\text{נא}}',$$

the procedure is preferably extended by a developed semi-supervised machine learning algorithm, which allows automating the calibration in determining the reference-sequence $P'$, starting with an initial threshold

$$\varepsilon_{\text{נא}}.$$

The machine learning algorithm needs at least three machining-cycles providing the instance number $z=3$, with the same product-variant and machined sequential for the online training data. The online training data is defined as online power data $S'$, which is a bounded sequence for an unknown process-and signals-condition. In particular, the discovered reference-threshold

$$\varepsilon_{\text{נא}}'$$

should allow to distinguish between two different machining types such as drilling, milling, etc. performed during one machining-cycle. The intelligent fuzziness should couple to the increasing entropy determined out of three machining-cycles. To reach the objective of intelligent fuzziness two assumptions are preferably made:

1st Case: If the cumulated total distance $D(i,j)$ changes in similar intervals, between the three machining-cycles, an stationary process- and signal- condition are discovered.
2nd Case: If the cumulated distance $D(i,j)$ changes in growing intervals, the machining condition- and\or the signal-condition is nonstationary.

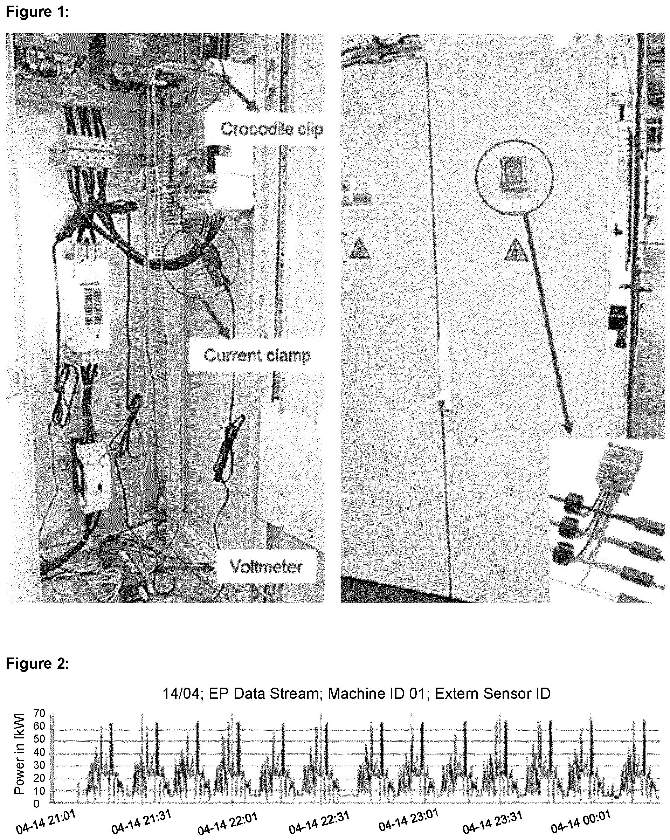

For the 1st case, the distance max accumulated $D'_{max}$ for the three identified subsequences out of the online power data similar to an initial sequence need to be determined and a future growing rate to be estimated from the machine learning procedure.
For the 2nd case, a set of monitor indicator is to be proposed allowing to distinguish between the superposed and degraded process- and signal-condition.
Unlike the streaming power data $S$, the online power data $S'$ is a bounded sequence with at least three subsequences $SP'$ similar to an initial sequence $P$ selected from the operator. A reinforced learning procedure is developed, allowing to the label of new discovered process-conditions within a manufacturing context. The operator needs to count of at least three occurrences $z$ of a subsequence in $S'$ similar to the initial sequence. Just two occurrences would be not enough, then to define a step width at least three support points are required. Figure 2 below illustrates the required inputs.
The predictive pattern discovery procedure preferably works as explained previously. The online power data are streamed out of a database with the same arriving process- and signal-condition from the streaming power data. The identified number of subsequences $P'$ similar to the initial sequence $P$ called identification number $z'(t)$ during runtime $t_j$. The number of identifications depends on the initial threshold

$$\varepsilon_{\text{נא}}$$

and selected initial sequence. The maximum total accumulated distance $D'_{max}$ is reported for each identified subsequence

$$SP'[s_{\text{א}}: s_{\text{ב}}]_{id}.$$

Two learning procedures are developed with different strategies, compete against each other selecting automatically the threshold, and identifying the subsequence as reference.
Thus, the strategy for medium fuzziness is presented in following. The learning procedure is an iterative approximation which is conducted to identify out of online power data exactly $z = 3$ subsequences, and take each identified subsequence

$$SP'_1[s_\aleph: s_\beth]_{id}, \; SP'_2[s_\aleph: s_\beth]_{id}$$

and

$$SP'_3[s_\aleph: s_\beth]_{id}$$

as a new initial sequence, such as

$$SP'_z[s_\aleph: s_\beth]_{id}: \; -> P$$

until the lowest total accumulative distance is found. The subsequence with the lowest total accumulative distance is chosen to be the most similar to the other two sequences and selected as new reference sequence

$$Pa'[p_1:p_\beth].$$

The strategy to discovery of the reference-threshold

$$\varepsilon_{\aleph\beth}'$$

is now presented:

The first step is to discover an upper bound for an unknown threshold.

1st Step for Strategy (a): The upper bound threshold for the first initial sequence is discovered with an exponential series $\{a_j = 4^j\}$, $j \in \mathbb{N}$ for each incremental increasing step j. Starting by j = 1 until the stop criteria $z'(t) \geq z$ are fulfilled. During development of the algorithm other series have been tested. A problem occurring was a very high first estimation of the upper bound, which thus resulted in a weak estimation of the threshold leading to several mismatches. Therefore, the sequence and the resulting step size have preferably been decreased to an exponential sequence with the base of 4.

1st Step for Strategy (b): The highest lower bound $\varepsilon_{HL,1}$ for the first initial sequence- determined in step 2, in the first iteration - is used as a potential upper bound, if the requirement $z'(t) \geq z$ is met. Otherwise, the previously determined $\varepsilon_{HL,1}$ is quadrupled until the requirement is fulfilled.

2nd Step to find the highest lower bound: In several (accuracy a = 10) iterations, the previously determined upper bound is decreased (increased), if the number of identification $z'(t) \geq z$. The step size shrinks by half each iteration starting at half the size of the upper bound. The highest lower bound then is the lowest possible threshold yet leading to exactly z identification.

3rd Step to find maximum distance: The highest lower bound which has been determined in the previous step is now used to as a threshold to discover the other z occurrence. For each identified sequence, the total accumulated distance is reported and the maximum of all distances are set as a new initial threshold.

4th Step intelligent fuzziness for the threshold: The threshold discovered based on the reference sequence is determined as the sum of the highest lower bound and the maximum accumulated distance:

$$\varepsilon_{\aleph\beth}' = \varepsilon_{HL} + dist_{max}$$

## Brief description of the figures

**Figure 1** shows a sensor arrangement for a production device in order to measure the consumed electrical power.

**Figure 2** shows streaming power data for an exemplary machine tool (production device) in a machining line.

**Figure 3** shows an online training process for automated threshold (L*) and reference pattern (R) selection.

**Figure 4** shows schematically different kind of analysis and associated key figures which are either performed by means of absolute values of the properties of M or by comparison of the properties of M with reference measurement data R.

**Figure 5** shows schematically the duration deviation analysis.

**Figure 6** shows schematically the time horizon analysis.

**Figure 7** shows schematically the similarity analysis.

**Figure 8** shows results for recognized in-processing states as fault (yellow) and failure (red).

Detailed description of the figures

**Figure 1** shows a sensor arrangement for a production device in order to measure the consumed electrical power. As is shown on the right side, inductive sensor **1** can be installed at the control cabinet **3** of a production device in order to measure the consumed electrical power of the production device with a fixed sampling rate. Like this, a scalable, non-invasive measurement method can be realized.

On the left side, a more traditional sensing scheme based on clamping electrical cables **1** in the control cabinet **3** is shown.

**Figure 2** shows streaming power data for an exemplary machine tool (production device) in a machining line. Shown is the electrical power of a production device over time, sampled in regular intervals, where the data suggests that a process (e.g. drilling) is regularly repeated, as can be seen in the repetitive similar patterns in the power distribution.

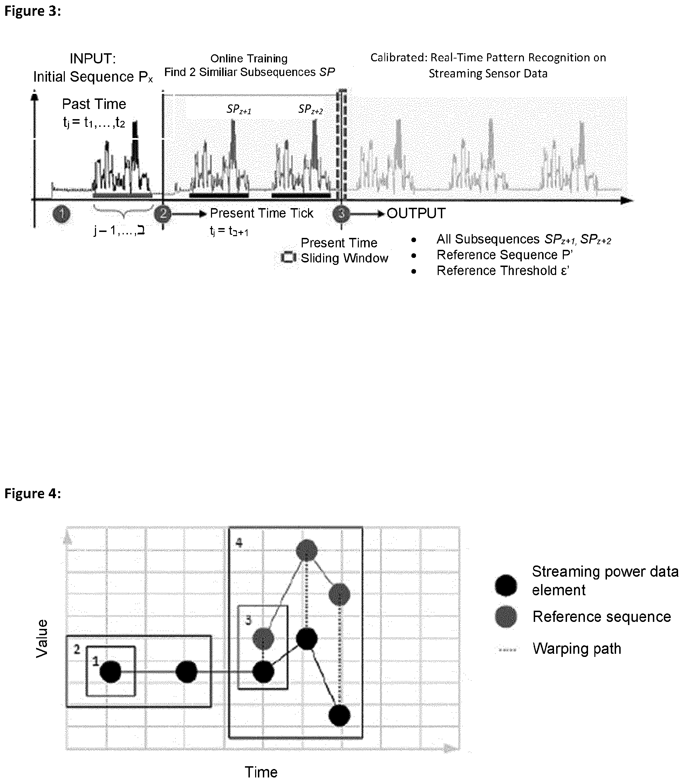

**Figure 3** shows an exemplary online training process for automated threshold L* ($\varepsilon$' in the figure) and reference pattern (R) selection. At first, a first reference pattern, e.g. $R_1$ (to the left of the figure, described as Pz in the figure) is compared with the other reference patterns, e.g. $R_2$ and $R_3$ within a sampled data sequence, e.g. S. If these similar patterns can be identified by the first pattern and an appropriately chosen threshold value, a reference pattern R (P' in the figure) can be chosen and can be used in order to evaluate the current pattern similarity of online measurement data streamed from the sensor in order to recognize and/or identify (sub-) processes of the production device and to generate appropriate key figures.

**Figure 4** shows schematically different kinds of analysis and associated key figures which are either performed by means of absolute values of the properties of M or by comparison of the properties of M with reference measurement data R. These different kinds of data analysis schemes are preferably described as different complexity levels of data analysis, which are characterized by different numbers 1 - 4 in the figure.

Level 1 describes an analysis with respect only to the amplitude and or timing information of one particular measurement point.

Level 2 describes an analysis with respect to absolute values of two different (consecutive) measuring points, for example with respect to differences in amplitude and/or timing information of the two points.

Level 3 describes a first analysis scheme wherein measurement data (in black) is compared to reference data R (in blue). In this complexity level, both points of measurement data and reference data, which are temporally associated (have the same relative timing) are compared with respect to their characteristics, e.g. amplitude.

Level 4 describes a more elaborate analysis scheme between measurement data and reference data involving comparing a pattern comprising several points of measurement data and reference data, for example their similarity.

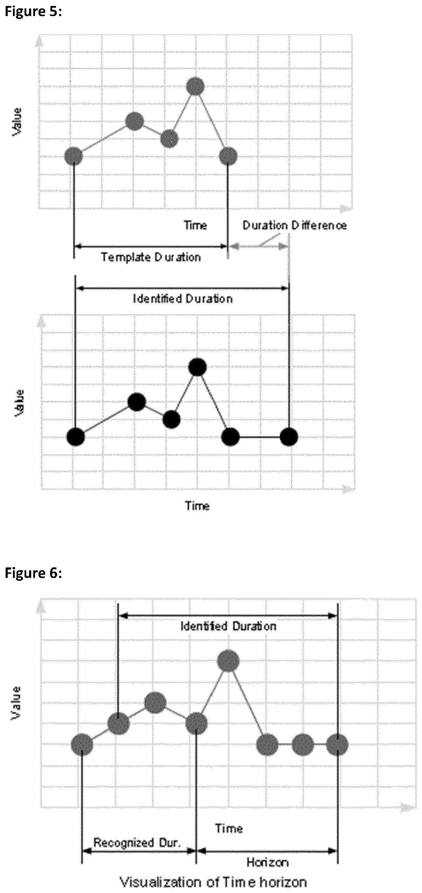

**Figure 5** shows schematically the duration deviation analysis, where the temporal difference between the reference pattern (in blue above) and the measurement data (in black below) is analyzed.

**Figure 6** shows schematically the time horizon analysis, where the temporal difference between the recognition time of a pattern and the time of identification of a pattern is analyzed.

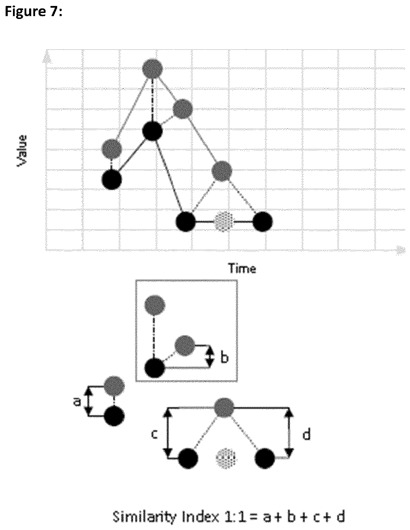

**Figure 7** shows schematically the similarity analysis. In this analysis, preferably the differences in power between the measurement data points (in black) and the reference data points (in blue) are established. The differences in power are preferably established between each measurement point (of M) and its associated reference point (of R). The calculated value is then preferably averaged.

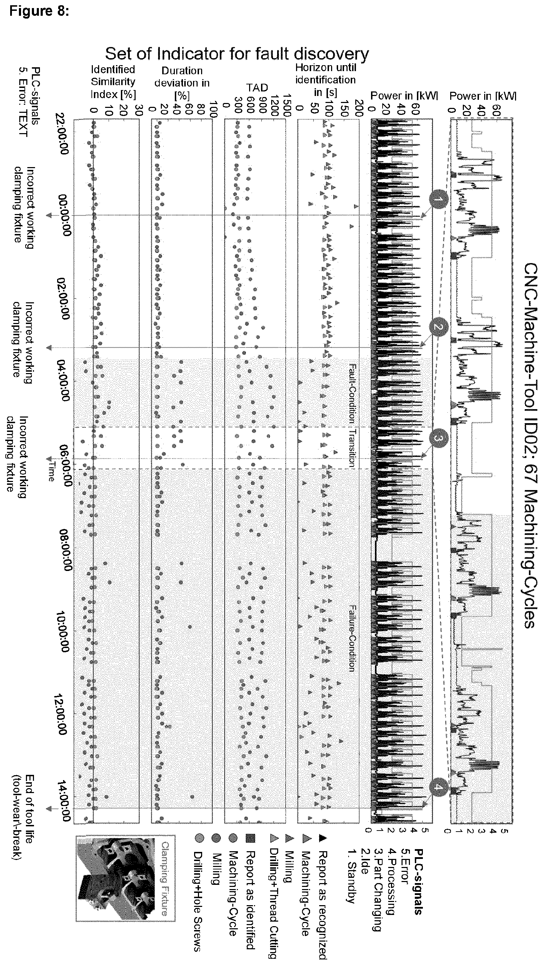

**Figure 8** shows results for recognized in-processing states as fault (yellow) and failure (red). From the measured data, several key figures can be calculated, such as time horizon analysis, duration deviation, similarity index etc. The onset of a fault within the production device can e.g.

be clearly recognized from the sudden rise in the duration deviation. Without further intervention, eventually a complete failure arises (shown in red).

List of indications

1 (Inductive) Sensor
3 Control cabinet of production device

List of references

[1] Ratanamahatana, C.A., Keogh, E., 2004. Making Time-series Classification More Accurate Using Learned Constraints, in: Berry, M.W. (Ed.), Proceedings of the Fourth SIAM International Conference on Data Mining. Society for Industrial and Applied Mathematics, Philadelphia, pp. 11-22.

[2] Sakoe, H., Chiba, S., 1978. Dynamic programming algorithm optimization for spoken word recognition. IEEE Transactions on Acoustics, Speech, and Signal Processing 26 (1), pp. 43-49.

## Claims

1. Computer-implemented method for the scalable real-time state recognition of processes and/or sub-processes during production with electrically driven production plants and for the generation of corresponding key figures, comprising the following steps:

   a) generation of a time sequence of measurement data M by determining a power consumption of at least one production device with a predetermined sampling rate;
   b) transmission of the time sequence of measured data M to a computing unit via streaming protocols RTP, UDP, RTP/IP and/or UDP/IP, each transmitted measuring point being provided with a continuous index i and preferably a time stamp relating to the arrival time in the computing unit;
   c) calculating, using a Dynamic Time Warping-algorithm, a current pattern similarity of amplitudes between the time sequence of measured data M and a reference measurement data R using the distance of the current measuring point of the measured data M with each reference measuring point of the reference sequence R and the accumulated distance of the past measuring point of the time sequence of measured data M with each reference measuring point of the reference measurement data R,

   where determining the reference measurement data R of a specific production process and/or sub-process and an associated threshold value L* are **characterized in that**
   an analysis of pattern similarity is performed between a measurement data sequence S and each finite temporal sequence of pattern measurement data $R_1$ - $R_3$ with respect to each measurement point of S in a given temporal sequence,
   wherein the measurement data sequence S comprises measurement data measured at once
   while a certain production process and/or sub-process to be represented by $R_1$ - $R_3$ has been executed three times in a row at the measured production device and wherein $R_1$ - $R_3$ comprise three representative reference measurements of a particular production process and/or sub-process and are successively included in the measurement of data sequence S, and
   wherein reference measurement data R is selected from the pattern measurement data $R_1$ - $R_3$ on the basis of the pattern similarity with the measurement data sequence S and
   wherein the threshold value L* is selected on the basis of a suitability to identify only the pattern measurement data $R_1$ - $R_3$ in the measurement data sequence S;

   d) creation of real-time key figures comprising a real-time key figure which is representative for the current pattern similarity;
   e) recognition and/or identification of a specific production process and/or sub-process on the basis of recognition and/or identification of the reference sequence R in the time sequence of measured data M when the current pattern similarity represented by the accumulated distance calculated in step c) falls below the threshold value L*;
   f) further processing of the real-time key figures and/or storage of the real-time key figures in a database.

**2.** Method according to the previous claim, wherein the power consumption is an electric power consumption and is measured by at least one sensor (1), preferably an external sensor based on an inductive and/or capacitive measurement.

**3.** Method according to any one of the previous claims, wherein the reference measurement data R selected is that of the reference measurements $R_1$ - $R_3$ with which the measurement data sequence S has the highest pattern similarity.

**4.** Method according to any one of the preceding claims, **characterized in that**
the computing unit is present on the Internet.

**5.** Method according to any one of the preceding claims, **characterized in that**
the further processing of the real-time key figures and/or storage of the real-time key figures in a database are selected from the group comprising activation of a warning system, visualization of a temporal course of the key figures, programmable logic controller, Supervisory Control and Data Acquisition, Manufacturing Execution System, Enterprise Resource Planning, Supply Chain Management, Maintenance Management, Statistical Process Control and/or Quality Management System.

**Patentansprüche**

**1.** Computerimplementiertes Verfahren zur skalierbaren Echtzeitzustandserkennung von Prozessen und/oder Teilprozessen bei der Herstellung mit elektrisch angetriebenen Produktionsanlagen und zur Erzeugung entsprechender Schlüsselzahlen, umfassend die folgenden Schritte:

a) Erzeugung einer Zeitfolge von Messdaten M durch Bestimmen einer Leistungsaufnahme mindestens einer Produktionseinrichtung mit einer vorbestimmten Abtastrate;
b) Übertragung der Zeitfolge von Messdaten M an eine Recheneinheit über Streaming-Protokolle RTP, UDP, RTP/IP und/oder UDP/IP, wobei jeder übertragene Messpunkt mit einem fortlaufenden Index i und vorzugsweise einem Zeitstempel betreffend die Eingangszeit an der Recheneinheit versehen wird;
c) Berechnen einer aktuellen Musterähnlichkeit von Amplituden zwischen der Zeitfolge von Messdaten M und Referenzmessdaten R unter Verwendung eines Dynamic-Time-Warping-Algorithmus unter Verwendung des Abstands des aktuellen Messpunkts der Messdaten M zu jedem Referenzmesspunkt der Referenzfolge R und des kumulierten Abstands des vorigen Messpunkts der Zeitfolge von Messdaten M zu jedem Referenzmesspunkt der Referenzmessdaten R, wobei Bestimmen der Referenzmessdaten R eines bestimmten Produktionsprozesses und/oder -teilprozesses und eines zugehörigen Schwellenwerts L* **dadurch gekennzeichnet ist, dass** eine Analyse der Musterähnlichkeit zwischen einer Messdatenfolge S und jeder endlichen zeitlichen Folge von Mustermessdaten $R_1$-$R_3$ in Bezug auf jeden Messpunkt von S in einer gegebenen zeitlichen Folge durchgeführt wird,

wobei die Messdatenfolge S Messdaten umfasst, die sofort gemessen werden, während ein bestimmter Produktionsprozess und/oder -teilprozess, der durch $R_1$-$R_3$ repräsentiert werden soll, dreimal hintereinander an der gemessenen Produktionseinrichtung ausgeführt wird, und
wobei $R_1$-$R_3$ drei repräsentative Referenzmessungen eines bestimmten Produktionsprozesses und/oder -teilprozesses umfassen und nacheinander in die Messung der Datenfolge S einbezogen werden und
wobei Referenzmessdaten R aus den Mustermessdaten $R_1$-$R_3$ auf der Grundlage der Musterähnlichkeit mit der Messdatenfolge S ausgewählt werden und
wobei der Schwellenwert L* auf der Grundlage einer Eignung zum Identifizieren nur der Mustermessdaten $R_1$-$R_3$ in der Messdatensequenz S ausgewählt wird;

d) Erstellung von Echtzeitschlüsselzahlen, umfassend eine Echtzeitschlüsselzahl, die für die aktuelle Musterähnlichkeit repräsentativ ist;
e) Erkennung und/oder Identifizierung eines bestimmten Produktionsprozesses und/oder -teilprozesses auf der Grundlage der Erkennung und/oder Identifizierung der Referenzfolge R in der Zeitfolge von Messdaten M, wenn die durch den in Schritt c) berechneten kumulierten Abstand repräsentierte aktuelle Musterähnlichkeit den Schwellenwert L* unterschreitet;
f) Weiterverarbeiten der Echtzeitschlüsselzahlen und/oder Speicherung der Echtzeitschlüsselzahlen in einer Datenbank.

**2.** Verfahren nach dem vorhergehenden Anspruch, wobei die Leistungsaufnahme eine elektrische Leistungsaufnahme ist und von mindestens einem Sensor (1), vorzugsweise einem externen Sensor basierend auf induktiver und/oder kapazitiver Messung, gemessen wird.

**3.** Verfahren nach einem der vorhergehenden Ansprüche, wobei die gewählten Referenzmessdaten R diejenigen der Referenzmessungen $R_1$-$R_3$ sind, mit denen die Messdatenfolge S die höchste Musterähnlichkeit aufweist.

**4.** Verfahren nach einem der vorstehenden Ansprüche,
**dadurch gekennzeichnet, dass**
die Recheneinheit im Internet vorhanden ist.

**5.** Verfahren nach einem der vorstehenden Ansprüche,
**dadurch gekennzeichnet, dass**
das Weiterverarbeiten der Echtzeitschlüsselzahlen und/oder die Speicherung der Echtzeitschlüsselzahlen in einer Datenbank ausgewählt sind aus der Gruppe, umfassend Aktivierung eines Warnsystems, Visualisierung eines zeitlichen Verlaufs der Schlüsselzahlen, speicherprogrammierbarer Steuerung, Überwachungssteuerung und Datenerfassung, Manufacturing-Execution-System, Enterprise-Resource-Planning, Lieferkettenmanagement, Instandhaltungsmanagement, statistischer Prozesskontrolle und/oder Qualitätsmanagementsystem.

**Revendications**

**1.** Procédé mis en œuvre par ordinateur pour la reconnaissance d'état évolutif en temps réel des processus et/ou sous-processus lors de la production avec des installations de production à entraînement électrique et pour la génération des chiffres clés correspondants, comprenant les étapes suivantes :

a) la génération d'une séquence temporelle de données de mesure M en déterminant une consommation électrique d'au moins un dispositif de production avec une cadence d'échantillonnage prédéterminée ;
b) la transmission de la séquence temporelle des données mesurées M à une unité de calcul via les protocoles de flux RTP, UDP, RTP/IP et/ou UDP/IP, chaque point de mesure transmis étant muni d'un indice continu i et de préférence d'un horodatage relatif à l'heure d'arrivée dans l'unité de calcul ;
c) le calcul, à l'aide d'un algorithme de déformation temporelle dynamique, d'une similarité du modèle actuel d'amplitudes entre la séquence temporelle de données mesurées M et une donnée de mesure de référence R en utilisant la distance du point de mesure actuel des données mesurées M avec chaque point de mesure de référence de la séquence de référence R et la distance cumulée du point de mesure passé de la séquence temporelle des données mesurées M avec chaque point de mesure de référence des données de mesure de référence R,

où la détermination des données de mesure de référence R d'un processus de production spécifique et/ou d'un sous-processus et d'une valeur seuil associée L* se caractérisent en ce que une analyse de similarité de modèles est effectuée entre une séquence de données de mesure S et chaque séquence temporelle finie de données de mesure de modèle $R_1$ - $R_3$ par rapport à chaque point de mesure de S dans une séquence temporelle donnée,
dans lequel la séquence de données de mesure S comprend des données de mesure mesurées à la fois pendant un certain processus de production et/ou un sous-processus à représenter par $R_1$ - $R_3$ a été exécuté trois fois de suite au niveau du dispositif de production mesuré et
dans lequel $R_1$ - $R_3$ comprend trois mesures de référence représentatives d'un processus de production particulier et/ou d'un sous-processus et sont successivement inclus dans la mesure de la séquence de données S, et
dans lequel les données de mesure de référence R sont sélectionnées parmi les données de mesure de modèle $R_1$ - $R_3$ sur la base de la similarité de modèles avec la séquence de données de mesure S et
dans lequel la valeur seuil L* est sélectionnée sur la base d'une aptitude à identifier uniquement les données de mesure de modèle $R_1$ - $R_3$ dans la séquence de données de mesure S ;

d) la création de chiffres clés en temps réel comprenant un chiffre clé en temps réel qui est représentatif de la similarité du modèle actuel ;
e) la reconnaissance et/ou l'identification d'un processus de production spécifique et/ou d'un sous-processus sur la base de la reconnaissance et/ou de l'identification de la séquence de référence R dans la séquence temporelle des données mesurées M lorsque la similarité du modèle actuel représentée par la distance cumulée calculée à l'étape c) tombe en dessous de la valeur seuil L* ;

f) le traitement ultérieur des chiffres clés en temps réel et/ou du stockage des chiffres clés en temps réel dans une base de données.

2. Procédé selon la revendication précédente, dans lequel la consommation d'énergie est une consommation d'énergie électrique et est mesurée par au moins un capteur (1), de préférence un capteur externe sur la base d'un capteur inductif et/ou de mesure capacitive.

3. Procédé selon l'une quelconque des revendications précédentes, dans lequel les données de mesure de référence R sélectionnées sont celles des mesures de référence $R_1$ - $R_3$ avec lesquelles la séquence de données de mesure S présente la plus grande similarité de modèle.

4. Procédé selon l'une quelconque des revendications précédentes,
**caractérisé en ce que**
l'unité de calcul est présente sur Internet.

5. Procédé selon l'une quelconque des revendications précédentes,
**caractérisé en ce que**
le traitement ultérieur des chiffres clés en temps réel et/ou du stockage des chiffres clés en temps réel dans une base de données sont sélectionnés dans le groupe comprenant l'activation d'un système d'alerte, la visualisation d'un déroulement temporel des chiffres clés, l'automate programmable, le contrôle de surveillance et l'acquisition de données, le système d'exécution de la fabrication, le progiciel de gestion intégré, la gestion de la chaîne d'approvisionnement, la gestion de la maintenance, le contrôle statistique des processus et/ou le système de gestion de la qualité.

**Figure 1:**

**Figure 2:**

14/04; EP Data Stream; Machine ID 01; Extern Sensor ID

**Figure 3:**

INPUT:
Initial Sequence $P_x$

Online Training
Find 2 Similiar Subsequences *SP*

Calibrated: Real-Time Pattern Recognition on
Streaming Sensor Data

Past Time
$t_j = t_1,…,t_2$

$SP_{z+1}$    $SP_{z+2}$

$j - 1,…,コ$

Present Time Tick
$t_j = t_{コ+1}$

Present Time
Sliding Window

OUTPUT

- All Subsequences $SP_{z+1}$, $SP_{z+2}$
- Reference Sequence P'
- Reference Threshold ε'

**Figure 4:**

Value

Time

- Streaming power data element
- Reference sequence
- Warping path

**Figure 5:**

**Figure 6:**

**Figure 7:**

**Figure 8:**

Set of Indicator for fault discovery

CNC-Machine-Tool ID02; 67 Machining-Cycles

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108776276 A

**Non-patent literature cited in the description**

- **WANG YULIN et al.** *An analysis framework for characterization of electrical power data in machining*
- Making Time-series Classification More Accurate Using Learned Constraints. **RATANAMAHATANA, C.A. ; KEOGH, E.** Proceedings of the Fourth SIAM International Conference on Data Mining. Society for Industrial and Applied Mathematics, 2004, 11-22

- **SAKOE, H. ; CHIBA, S.** Dynamic programming algorithm optimization for spoken word recognition. *IEEE Transactions on Acoustics, Speech, and Signal Processing,* 1978, vol. 26 (1), 43-49